# EUROPEAN PATENT SPECIFICATION

(11) **EP 3 437 978 B1**
(45) Date of publication and mention of the grant of the patent: **17.03.2021**
(21) Application number: 18186762.3
(22) Date of filing: 01.08.2018
(51) Int. Cl.: B63B 21/16, B63B 21/56, B64C 39/02

(54) **METHODS AND SYSTEMS FOR LINE TRANSFER**
VERFAHREN UND SYSTEME ZUR LEITUNGSÜBERTRAGUNG
PROCÉDÉS ET SYSTÈMES DE TRANSFERT DE LIGNE

(30) Priority: 01.08.2017 NL 2019382
(43) Date of publication of application: 06.02.2019
(73) Proprietor: Rotortug Holding B.V., 3011 XE Rotterdam (NL)
(72) Inventor: Smoor, Jacobus Johan, 3011 XE Rotterdam (NL)
(74) Representative: V.O.

(56) References cited:
- EP-A2- 2 003 057
- CN-A- 105 752 337
- US-A1- 2011 204 188
- US-A1- 2012 226 394
- Felipe Gonzalez: "Mobile Manipulator UAV : Robotic Arm on a UAV", , 18 November 2015 (2015-11-18), XP054977817, Retrieved from the Internet: URL:https://www.youtube.com/watch?v=V5l2x2 zZNiI [retrieved on 2017-10-24]
- A. Gravendeel ET AL: "Automatic berthing", Rotterdam Mainport University of Applied Sciences, 17 April 2017 (2017-04-17), XP055417938, Retrieved from the Internet: URL:http://www.maritimesymposium-rotterdam .nl/uploads/Route/Automatic berthing.pdf [retrieved on 2017-10-23]
- Gary Peters: "How drones are changing the maritime industry", Ship Technology, 18 May 2016 (2016-05-18), XP055418006, Retrieved from the Internet: URL:http://www.ship-technology.com/feature s/featurehow-drones-are-changing-the-marit ime-industry-4865807/ [retrieved on 2017-10-23]

## Description

The invention relates to systems and methods for transfer of a line or heaving line or a relevant part thereof.

Line systems using lines and/or heaving lines are used in different applications, including, but not limited to mooring or towing operations. In such applications the transfer of lines can be a complicated procedure. For example a tugboat has to manoeuvre close to an object to be towed to catch the heaving line from the object to be towed. Normally the heaving line is thrown from the towing object onto the tugboat. Similarly in mooring a mooring ship may have to move close to a quay before receiving a mooring line.

US2012/226394A1 discloses an unmanned aerial vehicle (UAV) or manned/unmanned personal flying device (PFD) to deliver a deployable descent system to an elevated location at which people await rescue, such as people trapped in an upper story of a burning building. The UAV or PFD may be used to deliver the descent system, attach the descent system to the building, and deploy the descent system. After deployment, the descent system may be tensioned to prevent sway and facilitate descent. Figure 9 of the document discloses a 10-story building (902), wherein a Rescuee is awaiting rescue at elevated location (908), which, in this example, is a window sill. A UAV is approaching the elevated location with a deployable descent device (912).

The article "How drones are changing the maritime industry", Gary Peters, Ship Technology 18 May 2016, discloses a drone delivery to a ship by dropping a package, wherein the drone had to be launched from a tugboat as poor weather prevented take-off from shore, as originally planned.

An aim of the present disclosure is to provide for systems and methods for transfer of lines such as for example but not limited to cables, tow lines and/or heaving lines or relevant parts thereof, and avoid potential dangerous situations, such as for example dangerous positions of a tugboat during line transfer. An aim of the present disclosure is to provide for an alternative system or method for transfer of a relevant part of a line or heaving line, such as for example for transfer of an end portion of such line or heaving line. An aim of the present disclosure is to provide for a system or method for improving transfer of a portion of a line or heaving line, especially in but not limited to transfer of portions of a line or heaving line in vessel handling, such as towing or mooring.

These and/or other aims can be achieved at least in part with a system and/or method according to the present disclosure.

In an aspect a system according to the disclosure can be a system for transfer of a line or a heaving line for a line, wherein the system comprises at least a flying vehicle. Said flying vehicle is preferably provided with a connection provision adapted for releasably connecting a line or heaving line to said flying vehicle.

In an aspect the flying vehicle can be a remotely controllable vehicle. In an aspect the flying vehicle can be a drone. In an aspect the flying vehicle can be provided with a homing system for returning the vehicle automatically to a home position and/or with a target system for automatically flying the vehicle to a designated target position.

In an aspect the connection provision comprises at least a clamp. Such clamp can be remote controllable and/or can be manually operable and can be designed for clamping a part of a line or heaving line, such as for example an end portion thereof.

In an aspect the system can comprise at least one magnet, connected to or connectable to at least one of the flying vehicle and a line or heaving line to be transferred. In embodiments a magnet may be connected to an end portion of a line or heaving line, such that said end portion can be connected to the flying vehicle and transferred to a metal portion of an object to which the said end portion can then be temporarily connected by said magnet to said metal portion.

In an aspect the system can be designed such that the flying vehicle is provided with an ejection system for ejecting a line or heaving line connected to the flying vehicle. In this way for example an end portion of such line or heaving line can be shot to a target position from the flying vehicle when flying, preferably hoovering relatively close to said target position, for example some to several meters to some to several tens of meters.

In embodiments a flying vehicle for use in a system according to the disclosure can be provided with sensors, such as for example a camera. Such camera can be used for visual observation of movements of the flying vehicle, for example during attachment of a line to said vehicle, during transfer thereof, during approach of a target position and/or during delivery of the line at the target position. Additionally or alternatively a line or heaving line is provided, having a signaling device attached to or attachable to said line or heaving line. Such signaling device can be used for example for remote location of the line portion to which it is attached or can be effective for communication with for example a signal source at a target position.

In an aspect a system according to the disclosure can comprise a towing boat. The line can be a towing line, which preferably is connected to or connectable to a heaving line to be engaged by the flying vehicle. In an aspect the flying vehicle can be provided with a holding provision for a line or heaving line to be transferred. Such holding provision can comprise a winch or storage space.

In a method according to the disclosure, for transferring part of a line or heaving line, especially an end portion of a line or heaving line, the said line or heaving line, is coupled to a flying vehicle, and is flown from a position spaced apart from a designated target position to said target position. The relevant part of the line or heaving line preferably is an end portion thereof. Attaching a part of a line or heaving line may include storing a line or heaving line in or on the flying vehicle. In this disclosure part of a line or heaving line should also be understood as, but is not limited to, an entire line or heaving line.

The said line or heaving line may in embodiments be coupled releasably to said flying vehicle, for example by a magnet, clamping and/or a release mechanism. The said part of the line or heaving line can be transferred to said designated target position and attached to the target position for example by a magnet, clamping and/or a release mechanism.

When using a heaving line a further line, cable or other object may be attached to the heaving line at the target position, for example but not limited to a towing line.

In embodiments the target position can be programmed into the flying vehicle and/or the flying vehicle can be remote controlled during transfer. Additionally or alternatively a homing device can be provided at or near the target position, wherein the flying vehicle can be flown to said target position based at least on signals from said homing device. The homing device can for example be a beacon.

The disclosure is further directed to the use of a flying vehicle, said flying vehicle assisting in towing procedures, especially during transfer of a heaving line or towing line. The flying vehicle can for example be a drone. The flying vehicle can for example be used during transfer of lines or heaving lines and for providing an operator of or at a vessel of an improved visual on for example the vessel, vessels and/or structures in the vicinity of the vessel and the surrounding water.

In further elucidation of the present invention embodiments of the present disclosure, such as embodiments of methods and systems for transfer of a line or heaving line shall be described hereafter, with reference to the drawings. Herein shows:
Fig. 1 schematically a system of the disclosure;
Fig. 2 schematically a flying vehicle for use in a system or method of the disclosure, in a first embodiment;
Fig. 3 schematically a flying vehicle for use in a system or method of the disclosure, in a second embodiment;
Fig. 4 schematically a flying vehicle for use in a system or method of the disclosure, in a third embodiment;
Fig. 5 schematically embodiments of lines and heaving lines for use in a system or method of the disclosure;
Fig. 5A schematically a detail of a line or heaving line;
Figs. 6A-E a series of steps in a first embodiment of a method of the disclosure;
Figs. 7A-C a series of steps in a second embodiment of a method of the disclosure; and
Fig. 8 schematically a further embodiment of a flying vehicle according to the disclosure.

In this description embodiments of the invention will be described with reference to the drawings by way of example only. These embodiments should by no means be understood as limiting the scope of the disclosure. At least all combinations of elements and features of the embodiments shown are also considered to have been disclosed herein. In this description the same or similar elements and features will be referred to by the same or similar reference signs.

In this description expressions of orientation such as top, bottom, vertical etcetera are used for convenience only and refer to the orientation of a vehicle in a normal, horizontal position as seen in the accompanying drawings. Such expressions are not to be regarded as limiting the orientation of elements of the system in use.

In the present disclosure transfer of a line or heaving line or a part or portion thereof should be understood as meaning at least that a line connection is made possible by bringing a line portion, especially an end portion of a line or heaving line, from a first object to a second object, such that a line connection can be established between said first and said second object. Such line connection can be established by the line of which a part is transferred or by a line which is pulled onto one of said objects using a heaving line transferred between said objects.

In the present disclosure connecting a line or heaving line to a flying vehicle should be understood as also including storing of a line or heaving line at least partly or entirely in and/or on such flying vehicle.

In the present disclosure a flying vehicle can be a vehicle that can fly self propelled and preferably can hoover. A flying vehicle in the present disclosure can for example be a drone or helicopter. In this description a drone should be understood as a flying vehicle that is at least self propelled and can hoover.

Lines and line systems as referred to in this disclosure are a means of connecting two or more objects. In the present disclosure lines or heaving lines can be made using a wide range of different materials such as steel wire, or synthetic materials such as polyester, polyethylene, polyamide and UHMWPE fibres with a range of characteristics deemed desirable for such systems. In the present disclosure lines should also be understood as including but not limited to wires, cables, chains or similar means suitable for connecting objects.

In the present disclosure reference will be made to lines and heaving lines, in particular in towing and mooring systems and methods. It shall however be clear that the present disclosure is not limited to such methods or systems. In towing and mooring procedures currently towing lines are used, which may be floating lines, and heaving lines. Heaving lines are commonly relatively light lines, compared to for example towing or mooring lines. Heaving lines may have a relatively limited length when compared to for example towing lines.

Heaving lines are used for connecting to a towing or mooring line and pulling such towing line or mooring line towards and/or onto a vessel or quay, for providing a connection between for example a tug boat and a vessel to be towed or assisted, or between a vessel and a quay.

In towing procedures, which may include tugging and/or assisting vessel by a tug boat, currently a heaving line is thrown to a tug boat from a vessel to be assisted, whereby a person on the tug boat grabs this heaving line and ties this heaving line to a floating line. The heaving line will be connected to the floating line, which may for example be approximately 25 meters of polypropylene line of 30-40 mm diameter in diameter, with a simple knot. This floating line is connected to a main towing line which in turn is connected to the tug boat, for example by a towing point and towing winch, for example a render and recovery winch, as is known in the art. The floating line is winched up by the vessel to be assisted, until the main line is near a towing point on the said vessel to be assisted. The main line can now be connected to said towing point. From the moment the main towing line is secured on said towing point the towline connection is established. It shall be clear that a similar procedure can be followed for mooring a vessel, or for connecting other objects by a main line.

From this description it shall be clear that the tug boat will have to get very close up to a vessel to be assisted, or a vessel to be moored has to be very close to a quay in order to be able to throw a heaving line. This may be a difficult and dangerous procedure. Especially in for example rough weather conditions such as but not limited to high waves, strong winds, fog or otherwise limited vision.

The present disclosure provides for systems and methods alternative to these procedures, which may make such transfer procedures for example safer, more practical, quicker, less labor intensive and more reliable. In the present invention instead of throwing a line end or heaving line a relevant part of a line or heaving line is flown from a first to a second object. This can be performed safely and with high accuracy, without the necessity of close proximity of the two objects during such transfer.

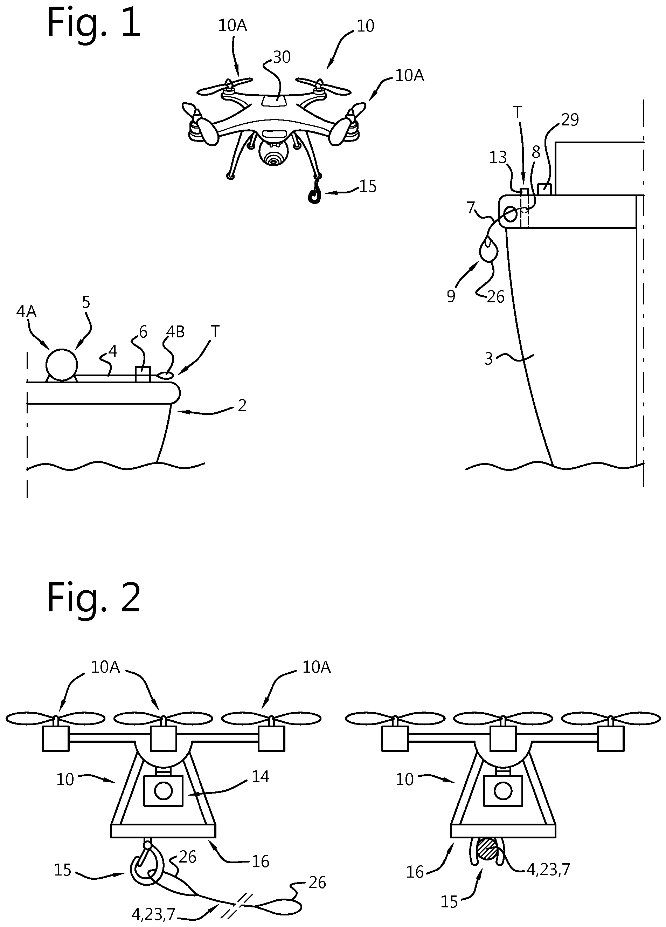

Fig. 1 schematically shows an embodiment including a system 1 of the present disclosure. This shows a first object 2, which is here shown as a tug boat, and a second object 3, which is here shown as a vessel to be assisted, which first and second object 2, 3 have to be connected by a towing line 4. In the further description where appropriate the first object 2 shall also be referred to as tug boat 2 or tug 2, whereas where appropriate the second object 3 shall also be referred to as vessel to be assisted 3 or vessel 3.

In the embodiment shown the tug 2 comprises a winch 5, which may be a render and recovery winch or any other suitable winch. A main towing line 4 is wound onto said winch, if available, or may be otherwise provided for and connected with a proximal end to the tug. A fairlead or other towing point or towing point apparatus 6 may be provided on the tug 2 for guiding the main towing line 4. A first end 4A of the main towing line 4 is hence connected to the tug.

In the embodiment of fig. 1 a heaving line 7 is provided on the vessel 3, for example having a first end 8 connected to a relevant connection point 13, for example a bollard, clamp or the like. The heaving line 7 may for example extend over a railing or through a scupper hole or the like, such that a second end 9 is preferably exposed to be engaged.

In fig. 1 a flying vehicle 10 is shown, which in this embodiment is shown as a drone 10, but could also for example be a helicopter type flying vehicle. The drone 10 can for example be brought by the tug 2, and be flown to the vessel 3, or be provided on the vessel 3, and be designed for connecting to a second end 9 of the heaving line 7 to the drone 10, preferably releasably.

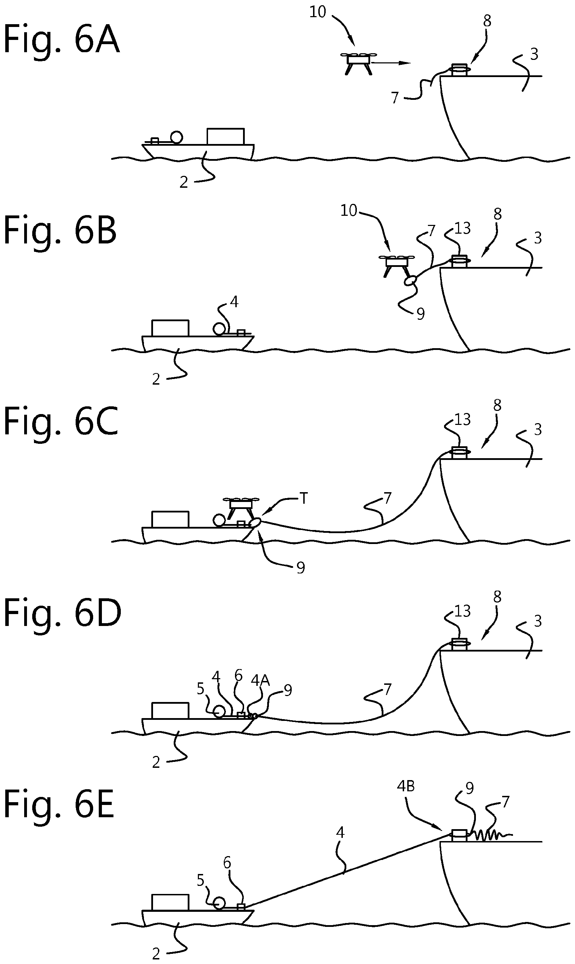

In fig. 6 a series of steps is shown schematically using a system 1 of the disclosure. In this embodiment again, as is shown in fig. 1, the first end 8 of the heaving line 7 is connected to the vessel 3. In a first step (fig. 6A) the drone 10 is flown from the tug 2 to the vessel 3. In step 2 (fig. 6B) the second end 9 of the heaving line 7 is connected to the drone 10. In step 3 (fig. 6C) the drone 10 is flown back to the tug 2, to a target position T, transferring the second end 9 of the heaving line 7 to the tug 2. In step 4 (fig. 6D) a second end 4B of the main towing line 4 is connected to the second end 9 of the heaving line 7, which is released from the drone 10. The drone 10 may then be stored appropriately. In step 5 (fig. 6E) the heaving line 7 is pulled back onto the vessel 3, for example using a winch or the like, for pulling the second end 4B of the main towing line 4 onto the vessel 3, to be connected to a towing point 13 of the vessel 3, establishing a towing line connection between the tug 2 and the vessel 3. Preferably the main towing line 4 is a floating line or a floating line (not shown) is provided between the second end 4B of the main towing line 4 and the second end 9 of the heaving line 7. Such floating line preferably would have a length sufficient to span the distance between the tug 2 and the vessel 3 during the transfer procedure.

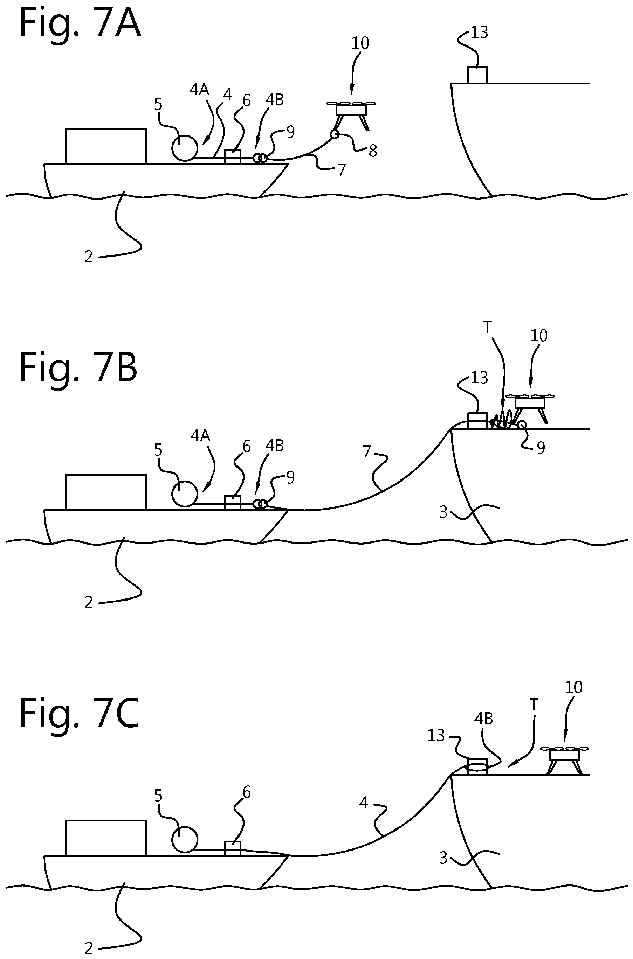

In fig. 7 steps of an alternative procedure are shown. In this embodiment a second end 9 of a heaving line 7 is or has been connected to a second end 4B of a main towing line 4, directly or for example through a floating line (fig. 7A). The heaving line 7 is provided on the tug 2. A first end 8 of the heaving line 7 is connected to the drone 10. This may be a releasable or a permanent connection. Then in a second step (fig. 7B) the drone 10 is flown to the vessel 3, preferably to a predetermined target position T. On the vessel 3 the heaving line 7 can be engaged, for example by personnel on the vessel 3 or by a winch or such mechanical hoisting means, for pulling the heaving line 7 onto the vessel 3 (fig. 7C) thus pulling the second end 4B of the main towing line 4 towards and onto the vessel 3, to be connected to a towing point 13 of the vessel 3, establishing a towing line connection between the tug 2 and the vessel 3. Preferably the main towing line 4 is a floating line or a floating line (not shown) is provided between the second end 4B of the main towing line 4 and the second end 9 of the heaving line 7. Such floating line preferably would have a length sufficient to span the distance between the tug 2 and the vessel 3 during the transfer procedure.

In embodiments, for example furthering a method of fig. 7, the heaving line 7 can be released from the towing line 4 on the vessel 3, directly prior to or after attaching the towing line 4 to the towing point 13. The drone 10 can be flown back to the tug 2, with the heaving line 7.

Obviously, in stead of using a heaving line 7 a line 4 can be engaged and transferred directly by a flying vehicle such as a drone according to the disclosure.

Additionally or alternatively a line or heaving line 7 can be stored in the flying vehicle 10, which is then flown for example from the tug 2 to the vessel 3, at which a first end 8 of the line or heaving line 7 is attached to the vessel 3. Then the flying vehicle 10 is flown back to the tug 2, carrying the second end 9 of the heaving line 7. At the tug 2 the second end 9 of the line 4 or heaving line 7 is delivered, for attaching to the tug 2 or to a towing line 4, directly or indirectly, for example through a floating line. Obviously this procedure could also be performed in opposite direction, starting the drone 10 from the vessel 3.

Fig. 2 schematically shows a flying vehicle 10 for use in a system 1 or method of the disclosure, in a first embodiment, in two alternatives. The drone 10 comprises propellers 10A for flying and hoovering and is in a known manner provided with controls and a battery for self propelled flying and hoovering. A camera 14 can be provided in a drone 10, for visual inspection of a surrounding area of the drone. The camera 14 may be provided in a known way on a gimbal or similar means for control of a view of the camera 14. This may be remote controlled in a known manner.

In the embodiment of fig. 2 the drone 10 is provided with a clamp 15, for example at a bottom side 16 thereof, for engaging a line 4 or heaving line 7. In fig. 2 by way of example two embodiments of a clamp 15 are shown, in which at the left hand side a clamp 15 is shown as a hook such as a safety hook or snap hook, arranged for engaging a loop or eye 26 in a line 4 or heaving line 7. At the right hand side a clamp 15 is shown for clamping a part of a line 4 or heaving line 7. Such clamp 15 may be pre-stressed in a closing position and may be manually or electronically opened, for example remote controlled, for clamping and/or releasing the line 4 or heaving line 7.

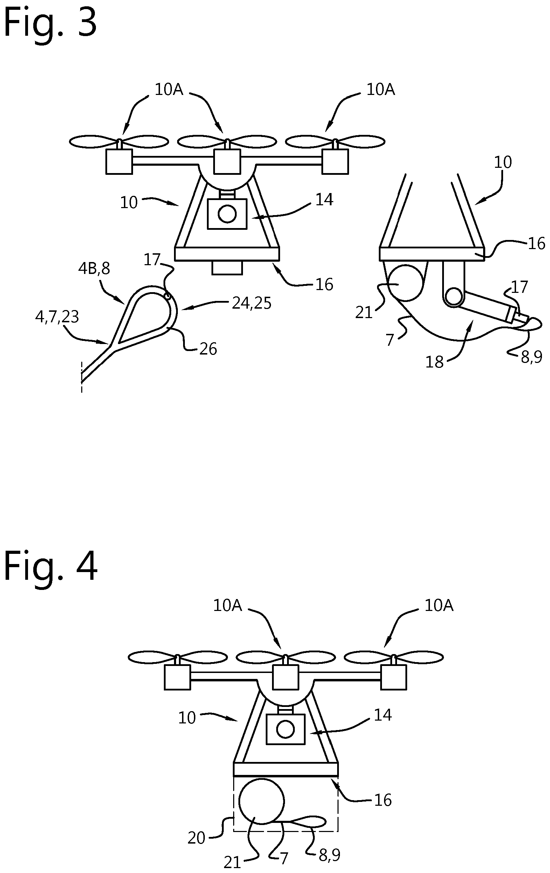

Fig. 3 schematically shows a flying vehicle 10 for use in a system or method of the disclosure, in a second embodiment. In this embodiment a magnet 17 can be used for attaching an end of a line 4 or heaving line 7 to the flying vehicle 10. In an embodiment shown on the left hand side the relevant end 4B, 9 of a line 4 or heaving line 7 may be provided with a magnet 17, which can be an electronic magnet 17, which can attach to a metal portion of the flying vehicle 10. After transferring the said end to a target position T, for example at a vessel 3 or a tug 2, the magnet can be used for attaching the said end 4B, 9 to said target position T. Alternatively or additionally the flying vehicle, such as drone 10 may be provided with a magnet 17, preferably an electro magnet, wherein the line 4 or heaving line 7 can be provided with a further magnet or a metal portion for connecting to such magnet 17. In fig. 3 on the right hand side part of a flying vehicle 10 is shown, provided with an ejection system 18 for shooting an end 4B, 9 of a heaving line 7 towards a target position T. The ejection system 18 can for example be based on a compressed gas, such as a CO₂ or an air system for shooting, as is known in the art of air guns, or it can for example be spring based. In embodiments an end of a line or heaving line to be shot towards a target position T can be provided with a magnet 17 as discussed, for connecting to the target position.

Fig. 4 schematically shows a flying vehicle 10 for use in a system 1 or method of the disclosure, in a third embodiment. In this embodiment the flying vehicle 10, for example a drone 10, comprises a storage provision 20 for a line, especially a heaving line 7, such that the said line can be transported with the flying vehicle 10. The holding provision 20 is shown formed by or comprising a winch 21 with which the line can be rolled and unrolled. Additional to or alternative to the winch the holding provision 20 can comprise or be formed by a compartment in and/or on the vehicle 10 for holding the line or heaving line 7.

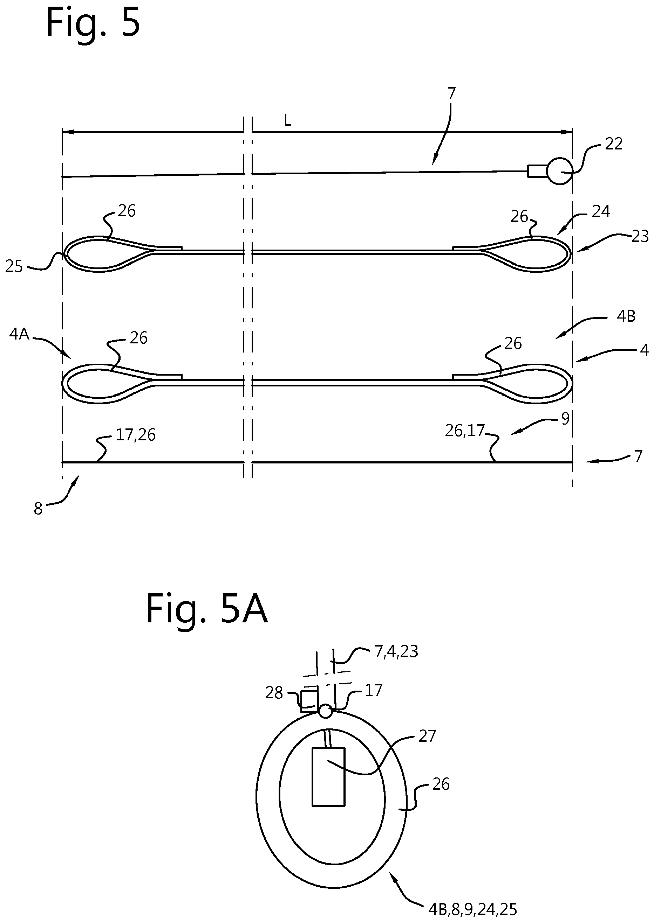

Fig. 5 schematically shows embodiments of lines and heaving lines for use in a system or method of the disclosure. In fig. 5 four different lines and heaving lines are shown.

On the top a traditional heaving line 7 is shown, which can for example have an overall length L of tens of meters to up to or beyond 50 meters, with a diameter of for example about 10 mm. At one end a ball shaped element 22, often referred to as monkey, is provided, providing a weight of for example 100 to 200 grams, which may make throwing easier.

The second from the top shows a typical floating line 23. A floating line 23 may be provided at opposite ends 24, 25 with a loop or eye 26, for example spliced into the line 23. The loops or eyes form connecting provisions for connecting the line 23 to for example a towing point 13 of a vessel 3 or tug 2 or to a further line, such as a towing line 4 or a heaving line 7. A floating line can for example have a length L of between 20 and 50 meters, such as for example about 25 meters, and a cross section with a diameter of about 50 mm. A floating line will weight such that it will float, for example about 50 kg per 100 meters.

The third of the top in fig. 5 shows a typical tow line 4 or a fore runner for such line, with a loop or eye 26, for example spliced into the line. Such line may have a weight of for example 200 kg per 100 meters. As a fore runner the overall length L may for example be between 20 and 50 meters, for example 25 meters, whereas as a main towing line 4 such length may be considerably longer, for example more than 50 meters, for example 100 meters or more.

The line at the bottom of fig. 5 is an example of a heaving line 7 which may be specifically designed for use in a method or system according to the present disclosure. This heaving line 7 can be relatively light, compared to for example a traditional heaving line, and can have a weight of for example less than 10 kg per 100 meter, preferably less than 5 kg per 100 meters, more preferably less than 4 kg per 100 meters, for example about 2 kg per 100 meters. One or opposite ends 8, 9 may be provided with suitable connecting elements, such as loops or eyes as described, a magnet, a clamp or the like.

Fig. 5A schematically shows a detail of a possible embodiment of a part of a line 4, 23 or heaving line 7 of any of the embodiments of fig. 5, especially an end 4B, 24, 9 thereof. In this embodiment the line 4, 23, 7 can be provided with a magnet 17 and a loop or eye 26, wherein the magnet 17 is provided near or in the loop or eye 26. Extending near or within the loop or eye 26 a grabbing element 27 is provided, suitable for being grabbed by or at least connected to the flying vehicle, for example by a clamp 15 or magnet 17 of the flying vehicle 10.

In embodiments as shown a line 4, 23 or heaving line 7 and/or a tug 2 and/or a vessel 3 can be provided, having a signaling device 28 attached to or attachable to e.g. said line 4, 23 or heaving line 7. Such signaling device 28 can for example be used for signaling the position of a relevant part of the line or heaving line to for example an operator of the system, and/or to an operator of the vessel 3 or tug boat 2.

In embodiments the flying vehicle may be programmable, such that it can automatically or semi-automatically fly to a predetermined target position T. Such target position T can for example be programmed into the flying vehicle 10, and can for example be based on a GPS location or on a specific signal of a homing device or beacon at a target position T. Additionally or alternatively the flying vehicle 10 can be remote controlled during transfer. In embodiments additionally or alternatively a homing device 29 can be provided at or near the target position T. The flying vehicle 10 can then be flown to said target position based at least on signals from said homing device 29. The homing device 29 can for example be a beacon, for example a WiFi or Bluetooth or radio beacon. The flying vehicle can be provided with a communication device 30 for receiving a homing signal from such homing device and defining a flying course to the target position T based on such signal. The homing device can be a mobile device, suitable to be placed at a target position T at will.

The purpose of the drone 10 in the present disclosure is to transfer at least part of the heaving line 7 from the tug 2 to a towing object, such as a vessel 3, or from a towing object such as a vessel 3 to a tug boat 2. Similarly a drone can be used in a similar way in mooring procedures.

The flying vehicle, such as a drone 10 can be provided with object recognition software that can identify the pre-determined target location T. The drone can bring a part, especially an end of the line or heaving line to a target position T, and preferably can stick it with a magnet or shoot it, or hook the special heaving line to the predetermined target position T. From that moment on a person or hoisting device on the towing object such as a vessel, or on the tug, can grab the special heaving line and work as normally to get the main line connected between for example towing points of tug and vessel for towing or assisting, or between vessel and quay, for mooring.

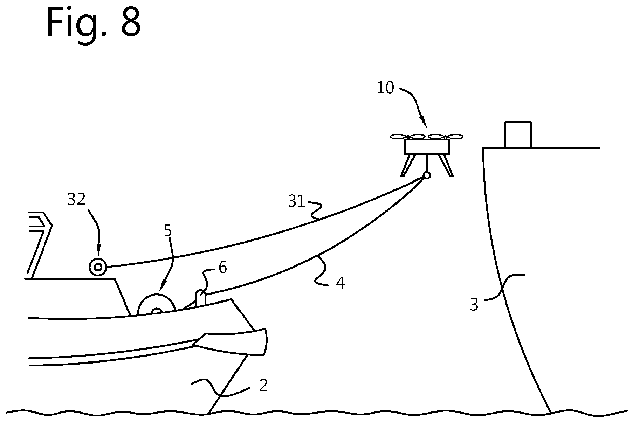

In fig. 8 schematically a further embodiment of a flying vehicle such as a drone 10 is shown, which is connected to an umbilical 31. The drone may be according to any one of the further embodiments, especially with regards to means for attaching a towing cable or hiewing line. The umbilical 31 can for example be connected to am umbilical winch 32 on a towing vessel or a vessel to be towed, for giving out and retracting the umbilical 31. The umbilical 31 can in embodiments primarily be a safety line, preventing the flying vehicle 10 to get lost, for example when one or more of its motors stop working or when a wireless connection is lost, or for example when the vehicle 10 collides with another object. In embodiment the umbilical 31 can additionally or alternatively be a line for forming at least one electrical connection with the flying vehicle 10, for example for control of the vehicle, additional to or alternative to a wireless control as described before, and/or for providing electrical power to the flying vehicle 10. The umbilical can also be used for transferring data to and/or from the flying vehicle10. The vehicle can for example be a thedered drone.

Another function of a flying vehicle such as a drone 10 can be that it can be used to get visual images from for example transfer of a line, mooring and/or towing operations that he normally cannot see. For example the drone 10 can provide for a bird-eye view of a tug, vessel, towing line, quay and surrounding waters. This can be achieved, prior to, during and/or after transfer of a line or heaving line or separate from such transfer of a line or heaving line.

The embodiments described and shown in the drawings are shown by way of example only and should by no means be considered as limiting the scope of the disclosure in any way. Many variants thereon are possible. For example a flying vehicle can be a helicopter or plane, whereas the lines or heaving lines can be provided with different connecting elements, such as for example but not limited to hooks, snap hooks, magnets, whereas a tow line may also be a mooring line or a towing or mooring chain or belt. Multiple flying vehicles can be used in the same procedure, for example for engaging the same or different lines and/or heaving lines.

These and many such variations are considered falling within the scope of the claims.

## Claims

1. System for transfer of a towing line (4) or a heaving line (7) for a towing line (4), wherein the system comprises at least a towing line (4) or a heaving line (7) for a towing line (4) and a flying vehicle (10), provided with a connection provision releasably connecting the towing line (4) or heaving line (7) to said flying vehicle (10), wherein the system comprises a tug boat (2).

2. System according to claim 1, wherein the flying vehicle (10) is a remotely controllable vehicle and/or, wherein the flying vehicle is a drone.

3. System according to any one of the previous claims, wherein the flying vehicle (10) is provided with a homing system for returning the vehicle automatically to a home position and/or, wherein the flying vehicle is provided with a target system for automatically flying the vehicle to a designated target position.

4. System according to any one of the previous claims, wherein the connection provision comprises at least a clamp.

5. System according to any one of the previous claims, wherein the system comprises at least one magnet, connected to or connectable to at least one of the flying vehicle and a towing line or heaving line to be transferred, and/or, wherein the flying vehicle is provided with an ejection system for ejecting a towing line or heaving line connected to the flying vehicle.

6. System according to any one of the previous claims, wherein the flying vehicle (10) is provided with at least a camera.

7. System according to any one of the previous claims, wherein a towing line (4) or heaving line (7) is provided, having a signaling device attached to or attachable to said towing line or heaving line.

8. System according to any one of the previous claims, wherein the towing line (4) is connected to or connectable to a heaving line (7) to be engaged by the flying vehicle.

9. System according to any one of the previous claims, wherein the flying vehicle(10) is provided with a holding provision for a towing line (4) or heaving line (7) to be transferred, which holding provision preferably comprises a winch or storage space.

10. Method for transferring part of a towing line (4) or heaving line (7), especially an end portion of a towing line (4) or heaving line (7), wherein the said towing line (4) or heaving line (7), especially an end portion thereof, is coupled to a flying vehicle (10) and is flown from a position spaced apart from a designated target position to said target position, wherein one of the target position and the position spaced apart from the target position is at a tug boat (2).

11. Method according to claim 10, wherein the said towing line (4) or heaving line(7) is coupled releasably to said flying vehicle (10), preferably by a magnet, clamping and/or a release mechanism, and/or, wherein the said part of the towing line or heaving line is transferred to said designated target position and attached to the target position preferably by a magnet, clamping and/or a release mechanism.

12. Method according to any one of claims 10 - 11, wherein the target position is programmed into the flying vehicle (10), and/or , wherein the flying vehicle is remote controlled during transfer, and/or , wherein a homing device, preferably a beacon, is provided at or near the target position and the flying vehicle is flown to said target position based at least on signals from said homing device.

13. Method according to any one of claims 10 - 12, wherein a towing line (4) or heaving line (7) stored in the flying vehicle(10) is flown to first object, at which first object a first end of the towing line or heaving line is attached to said first object, where after the flying vehicle is flown to a second object, at which second object a second end of the towing line or heaving line is delivered to said second object.

14. Method according to any one of claims 10 - 13, wherein a first end of the towing line (4) or heaving line(7) is connected to the flying vehicle (10), wherein a second end of the towing line or heaving line is or has been connected to a first object or to a line connected to said first object, where after the flying vehicle is flown to a second object, especially to a target position on said second object, for delivering the first end to the second object.

15. Method according to claim 13 or 14, wherein the first object is one of a tow boat (2) or an object (3) to be towed, and wherein the second object is the other of a tow boat (2) and an object (3) to be towed.

## Patentansprüche

1. System zur Übertragung einer Schleppleine (4) oder einer Wurfleine (7) für eine Schleppleine (4), wobei das System wenigstens eine Schleppleine (4) oder eine Wurfleine (7) für eine Schleppleine (4) umfasst, und ein Fluggerät (10), das mit einer Verbindungsvorrichtung versehen ist, die die Schleppleine (4) oder Wurfleine (7) mit dem Fluggerät (10) lösbar verbindet, wobei das System ein Schlepperboot (2) umfasst.

2. System nach Anspruch 1, wobei das Fluggerät (10) ein fernsteuerbares Gerät ist und/oder wobei das Fluggerät eine Drohne ist.

3. System nach einem der vorhergehenden Ansprüche, wobei das Fluggerät (10) mit einem Zielflugsystem zum automatischen Zurückfliegen des Geräts in eine Ausgangsposition versehen ist und/oder wobei das Fluggerät mit einem Zielsystem zum automatischen Fliegen des Geräts zu einer bestimmten Zielposition versehen ist.

4. System nach einem der vorhergehenden Ansprüche, wobei die Verbindungsvorrichtung wenigstens eine Klemme umfasst.

5. System nach einem der vorhergehenden Ansprüche, wobei das System wenigstens einen Magneten umfasst, der wenigstens mit dem Fluggerät oder einer zu übertragenden Schleppleine oder Wurfleine verbunden ist oder verbunden werden kann, und/oder, wobei das Fluggerät mit einem Auswurfsystem zum Auswerfen einer mit dem Fluggerät verbundenen Schleppleine oder Wurfleine versehen ist.

6. System nach einem der vorhergehenden Ansprüche, wobei das Fluggerät (10) mit wenigstens einer Kamera versehen ist.

7. System nach einem der vorhergehenden Ansprüche, wobei eine Schleppleine (4) oder eine Wurfleine (7) vorgesehen ist, wobei eine Signalisierungsvorrichtung an der Schleppleine oder der Wurfleine angebracht ist oder angebracht werden kann.

8. System nach einem der vorhergehenden Ansprüche, wobei die Schleppleine (4) mit einer Wurfleine (7) verbunden ist oder verbunden werden kann, die von dem Fluggerät in Eingriff gebracht werden soll.

9. System nach einem der vorhergehenden Ansprüche, wobei das Fluggerät (10) mit einer Haltevorrichtung für eine zu übertragende Schleppleine (4) oder Wurfleine (7) versehen ist, wobei die Haltevorrichtung vorzugsweise eine Winde oder einen Lagerraum umfasst.

10. Verfahren zum Übertragen eines Teils einer Schleppleine (4) oder einer Wurfleine (7), insbesondere eines Endabschnitts einer Schleppleine (4) oder einer Wurfleine (7), wobei die Schleppleine (4) oder die Wurfleine (7), insbesondere ein Endabschnitt davon, mit einem Fluggerät (10) gekoppelt ist und von einer Position, die von einer bestimmten Zielposition beabstandet ist, zu der Zielposition geflogen wird, wobei sich die Zielpositionen oder die Position, die von der Zielposition beabstandet ist, an einem Schlepperboot (2) befindet.

11. Verfahren nach Anspruch 10, wobei die Schleppleine (4) oder die Wurfleine (7) mit dem Fluggerät (10) lösbar gekoppelt ist, vorzugsweise durch einen Magneten, eine Klemmung und/oder einen Freigabemechanismus, und/oder, wobei der Teil der Schleppleine oder Wurfleine auf die bestimmte Zielposition übertragen und vorzugsweise durch einen Magneten, eine Klemmung und/oder einen Freigabemechanismus an der Zielposition angebracht wird.

12. Verfahren nach einem der Ansprüche 10 bis 11, wobei die Zielposition in das Fluggerät (10) programmiert ist, und/oder wobei das Fluggerät während der Übertragung ferngesteuert wird, und/oder wobei eine Zielflugvorrichtung, vorzugsweise ein Leuchtfeuer, an oder nahe der Zielposition vorgesehen ist, und das Fluggerät zu der Zielposition, wenigstens basierend auf Signalen von der Zielflugvorrichtung, geflogen wird.

13. Verfahren nach einem der Ansprüche 10 bis 12, wobei eine im Fluggerät (10) gelagerte Schleppleine (4) oder Wurfleine (7) zum ersten Objekt geflogen wird, wobei an dem ersten Objekt ein erstes Ende der Schleppleine oder Wurfleine an dem ersten Objekt angebracht wird, und danach das Fluggerät zu einem zweiten Objekt geflogen wird, wobei an dem zweiten Objekt ein zweites Ende der Schleppleine oder der Wurfleine an das zweite Objekt geliefert wird.

14. Verfahren nach einem der Ansprüche 10 bis 13, wobei ein erstes Ende der Schleppleine (4) oder der Wurfleine (7) mit dem Fluggerät (10) verbunden ist, wobei ein zweites Ende der Schleppleine oder der Wurfleine mit einem ersten Objekt oder einer Leine verbunden ist oder war, die mit dem ersten Objekt verbunden ist, wonach das Fluggerät zu einem zweiten Objekt geflogen wird, insbesondere zu einer Zielposition auf dem zweiten Objekt, um das erste Ende an das zweite Objekt zu liefern.

15. Verfahren nach Anspruch 13 oder 14, wobei das erste Objekt ein Schleppboot (2) oder ein zu schleppendes Objekt (3) ist, und wobei das zweite Objekt das andere, nämlich das zu schleppenden Objekt (3) bzw. das Schleppboot (2) ist.

## Revendications

1. Système de transfert d'un câble de remorquage (4) ou d'une ligne d'attrape (7) destinée à un câble de remorquage (4), dans lequel le système comprend au moins un câble de remorquage (4) ou une ligne d'attrape (7) destinée à un câble de remorquage (4) et un engin volant (10), muni d'un système de connexion qui relie de manière amovible le câble de remorquage (4) ou la ligne d'attrape (7) audit engin volant (10), dans lequel le système comprend un remorqueur (2).

2. Système selon la revendication 1, dans lequel l'engin volant (10) est un véhicule qui peut être piloté à distance, et/ou dans lequel l'engin volant est un drone.

3. Système selon l'une quelconque des revendications précédentes, dans lequel l'engin volant (10) est muni d'un système de ralliement destiné à faire revenir l'engin automatiquement vers une position de départ, et/ou dans lequel l'engin volant est muni d'un système de cible destiné à faire voler automatiquement l'engin vers une position cible désignée.

4. Système selon l'une quelconque des revendications précédentes, dans lequel le système de connexion comprend au moins une fixation.

5. Système selon l'une quelconque des revendications précédentes, dans lequel le système comprend au moins un aimant, relié ou qui peut être relié à au moins l'un de l'engin volant et d'un câble de remorquage ou d'une ligne d'attrape à transférer, et/ou dans lequel l'engin volant est équipé d'un système d'éjection destiné à éjecter un câble de remorquage ou une ligne d'attrape relié(e) à l'engin volant.

6. Système selon l'une quelconque des revendications précédentes, dans lequel l'engin volant (10) est équipé d'au moins une caméra.

7. Système selon l'une quelconque des revendications précédentes, dans lequel un câble de remorquage (4) ou une ligne d'attrape (7) est prévu(e), avec un dispositif de signalisation relié ou qui peut être relié audit câble de remorquage ou à ladite ligne d'attrape.

8. Système selon l'une quelconque des revendications précédentes, dans lequel le câble de remorquage (4) est relié ou peut être relié à un câble de remorquage (7) à engager par l'engin volant.

9. Système selon l'une quelconque des revendications précédentes, dans lequel l'engin volant (10) est équipé d'un système de maintien destiné à un câble de remorquage (4) ou une ligne d'attrape (7) à transférer, ledit système de maintien comprenant de préférence un treuil ou un espace de stockage.

10. Procédé de transfert d'une partie d'un câble de remorquage (4) ou d'une ligne d'attrape (7), et plus particulièrement d'une partie d'extrémité d'un câble de remorquage (4) ou d'une ligne d'attrape (7), dans lequel ledit câble de remorquage (4) ou ladite ligne d'attrape (7), et plus particulièrement une partie d'extrémité de celui-ci/celle-ci, est relié(e) à un engin volant (10) et piloté d'une position espacée d'une position cible désignée vers ladite position cible, dans lequel l'une de la position cible et de la position espacée de la position cible se trouve au niveau d'un remorqueur (2).

11. Procédé selon la revendication 10, dans lequel ledit câble de remorquage (4) ou ladite ligne d'attrape (7) est relié(e) de manière amovible audit engin volant (10), de préférence par un aimant, une fixation et/ou un mécanisme de libération, et/ou dans lequel ladite partie du câble de remorquage ou de la ligne d'attrape est transférée vers ladite position cible désignée et reliée à la position cible de préférence par un aimant, une fixation et/ou un mécanisme de libération.

12. Procédé selon l'une quelconque des revendications 10 à 11, dans lequel la position cible est programmée dans l'engin volant (10), et/ou dans lequel l'engin volant est piloté à distance pendant le transfert, et/ou dans lequel un dispositif de ralliement, de préférence une balise, est prévu au niveau ou à proximité de la position cible, et l'engin volant est piloté vers ladite position cible sur la base au moins de signaux qui proviennent dudit dispositif de ralliement.

13. Procédé selon l'une quelconque des revendications 10 à 12, dans lequel un câble de remorquage (4) ou une ligne d'attrape (7) stocké(s) dans l'engin volant (10) est piloté(e) vers un premier objet, au niveau duquel une première extrémité du câble de remorquage ou de la ligne d'attrape est reliée audit premier objet, après quoi l'engin volant est piloté vers un second objet, au niveau duquel une seconde extrémité du câble de remorquage ou de la ligne d'attrape est fournie audit second objet.

14. Procédé selon l'une quelconque des revendications 10 à 13, dans lequel une première extrémité du câble de remorquage (4) ou de la ligne d'attrape (7) est reliée à l'engin volant (10), dans lequel une seconde extrémité du câble de remorquage ou de la ligne d'attrape est ou a été reliée à un premier objet ou à un câble relié audit premier objet, après quoi l'engin volant est piloté vers un second objet, et plus particulièrement vers une position cible sur ledit second objet, afin de fournir la première extrémité au second objet.

15. Procédé selon la revendication 13 ou 14, dans lequel le premier objet est l'un d'un remorqueur (2) ou d'un objet (3) à remorquer, et dans lequel le second objet est l'autre d'un remorqueur (2) et d'un objet (3) à remorquer.
